(19) Europäisches Patentamt
European Patent Office
Office européen des brevets

(11) **EP 1 812 758 B1**

(12) **FASCICULE DE BREVET EUROPEEN**

(45) Date de publication et mention de la délivrance du brevet:
**02.05.2018 Bulletin 2018/18**

(21) Numéro de dépôt: **05817451.7**

(22) Date de dépôt: **14.11.2005**

(51) Int Cl.:
*F24H 9/20* (2006.01)    *F24H 1/16* (2006.01)
*A47J 31/54* (2006.01)

(86) Numéro de dépôt international:
**PCT/FR2005/002820**

(87) Numéro de publication internationale:
**WO 2006/051226 (18.05.2006 Gazette 2006/20)**

(54) **PROCÉDÉ ET DISPOSITIF DE FOURNITURE D'EAU CHAUDE**

VERFAHREN UND VORRICHTUNG ZUR WARMWASSERVERSORGUNG

METHOD AND DEVICE FOR SUPPLYING HOT WATER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.11.2004 FR 0412101**

(43) Date de publication de la demande:
**01.08.2007 Bulletin 2007/31**

(73) Titulaire: **SEB S.A.**
**69130 Ecully (FR)**

(72) Inventeurs:
• **GAULARD, Hervé**
**F-39700 Courtefontaine (FR)**

• **GOURAND, Thierry**
**F-39700 Orchamps (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
WO-A1-01/54551        GB-A- 2 324 014
GB-A- 2 394 215       US-A- 6 000 317
US-A1- 2002 051 632

**Description**

La présente invention concerne, de façon générale, un procédé et un dispositif de fourniture d'eau chaude de boisson.

On connaît des appareils permettant d'obtenir de l'eau très chaude en petite quantité (par opposition aux chauffe-eaux qui fournissent de grande quantité d'eau moyennement chaude) soit de un à deux litres maximum tels que les distributeurs de boissons chaudes, machines à café ou bouilloires.

Il est par exemple connu du document brevet GB 2 394 215 A, un dispositif de préparation de boisson par fourniture d'eau chaude comprenant :

-   un circuit de transport de liquide ;
-   une unité de commande électronique dotée d'une source d'alimentation électrique et d'un moyen de commande du dispositif ;

le circuit de transport comprenant :

-   un élément de chauffe du liquide comportant une résistance chauffante et disposé en série avec une pompe adaptée pour assurer la circulation de liquide dans le circuit à un débit donné, la pompe et l'élément de chauffe étant alimentés électriquement et commandés indépendamment l'un de l'autre par l'unité de commande.

Ce dispositif de l'art antérieur comporte un réservoir de stockage de liquide chauffé en permanence par l'élément de chauffe à une température comprise entre 50 et 60°C. Dès que l'utilisateur commande une quantité d'eau chaude, l'élément chauffant est alors suralimenté électriquement pour réchauffer l'eau déjà préchauffée par l'appareil jusqu'à une température supérieure pouvant aller jusqu'à ébullition puis, la pompe est actionnée pour délivrer l'eau une température supérieure à 60°.

Un tel dispositif permet de délivrer rapidement de l'eau chaude mais à pour inconvénient de consommer en permanence de l'énergie nécessaire à la préchauffe.

Dans le cas des bouilloires, l'inconvénient principal est le temps durant lequel l'appareil chauffe l'eau, donnant à l'utilisateur l'impression d'inactivité de l'appareil. Un autre inconvénient est que l'utilisateur à tendance à faire chauffer plus d'eau que nécessaire, ce qui engendre une perte de temps et d'énergie.

Dans le cas des distributeurs de boissons chaudes ou des machines à café de type « expressos », une quantité d'eau ou une masse d'aluminium est maintenue continuellement en chauffe. Ce qui engendre une consommation d'énergie inutile.

De plus, le temps d'attente avant le début de la délivrance de liquide chaud est relativement important et généralement supérieur à 5 secondes, allongeant ainsi le temps pour obtenir la boisson.

Une machine à café du type précédemment énoncé, mais supprimant la nécessité de préchauffer une grande quantité d'eau est par ailleurs décrite dans le document brevet US 6 000 317. Cette machine comporte un filtre recevant du café et situé à la sortie du circuit de transport de l'eau. Pour fonctionner, de l'eau est chauffée très rapidement (par exemple jusqu'à obtenir la température de percolation du café de 92°C à 96°C, mais pouvant aller au-delà de 100°C du fait de la contre-pression créée par le café) à haute pression, et est acheminée jusqu'au filtre à un débit qui est fonction de la pompe et d'autant plus faible que la perte de charge dû au café situé dans le filtre est importante. Ainsi, cette machine ne permet pas de délivrer de l'eau chaude (température supérieure à 70°C mais de préférence inférieure à 90°C) et à un débit constant élevé tel que supérieur à 0.5 centilitres par seconde. Le document brevet WO 01/54551 A1 divulgue un procédé selon le préambule de la revendication 1 et un dispositif selon le préambule de la revendication 10. Le problème posé est alors de pouvoir fournir de l'eau chaude selon un procédé et un dispositif permettant de délivrer assez rapidement une quantité d'eau chaude mais non bouillante(70°C minimum et de préférence inférieure à 90°C) au moins nécessaire pour remplir un récipient tel qu'une tasse (de 12 à 40 cl) afin de pouvoir réaliser une préparation de boisson telle que du thé sans préchauffe de l'appareil et/ou d'un volume d'eau et sans nécessité de très forte puissance de chauffe.

Le terme préchauffe désigne toute opération de chauffe antérieure au moment d'actionnement de l'appareil par l'utilisateur et une très forte puissance est à considérer comme supérieure à 3,5 kW sans pour autant aller au-delà, ce qui poserait des difficultés de réseau électrique domestique normalement prévu pour les utilisations dans le domaine du petit électroménager.

Par délivrer assez rapidement, il est entendu d'une part commencer à délivrer le liquide chauffé au débit voulu dans un temps au moins inférieur à 5 secondes après une action de commande du dispositif par l'utilisateur, et d'autre part délivrer un volume de liquide d'au moins 12 centilitres à 70°c en moins de 25 secondes.

Il est à noter que dans toute la description de l'invention l'abréviation « cl » désigne l'unité centilitre qui correspond à $10^{-2}$ décimètres cubes (dix puissance moins deux décimètres cubes). A cette fin, le problème posé est résolu par un procédé selon la revendication 1. Grâce à ce procédé, il est donc possible de satisfaire le problème posé en délivrant rapidement une quantité donné de liquide chaud à plus 70°C sans avoir à faire appel à une préchauffe continue du liquide à délivrer.

Grâce au ratio ci-dessus, le procédé de chauffe de l'invention peut être mis en oeuvre en alimentant le dispositif par une alimentation secteur disponible sur les réseaux publics domestiques dans le monde (par exemple réseau européen en 220 V à 16 Ampères et en réseau américain en 110 V).

Ainsi la puissance électrique moyenne de la résistance chauffante utilisée pour la mise en oeuvre du procédé et du dispositif de l'invention est choisie pour être inférieure à 3500 W cette valeur pouvant être mesurée lorsque la résistance est alimentée électriquement par un réseau public domestique précédemment évoqué.

Suivant l'invention, on commande la pompe et l'élément de chauffe, indépendamment l'un de l'autre, par une unité de commande électronique dotée d'une source d'alimentation électrique et d'un moyen de commande, le procédé peut être déclenché par une seule commande initiale exercée par l'utilisateur sur le moyen de commande et à réception de cette commande une unité de commande électronique gère l'ensemble des actions du procédé.

Ainsi la chauffe du liquide est déclenchée uniquement après action de l'utilisateur sur le moyen de commande, puis la circulation à un débit fixe donné de liquide chauffé commence uniquement après que la température du liquide ait atteint le premier seuil de température.

On peut également faire en sorte que l'on coupe l'alimentation de la résistance chauffante dès que la température mesurée T est supérieure à un second seuil T2 tout en maintenant la circulation du liquide et que l'on coupe la circulation du fluide quand on a fourni à l'utilisateur la quantité de liquide souhaitée. Ceci permet de poursuivre la délivrance en continu de liquide chauffé, sans que celui-ci ne passe sa température de vaporisation. Le liquide délivré est versé dans un récipient qui est préférentiellement une tasse.

L'invention prévoit également un dispositif de préparation de boisson par fourniture d'eau chaude comprenant les caractéristiques de la revendication 10. Ce dispositif répond également au problème posé et permet la mise en oeuvre du procédé de l'invention.
De plus, il peut comporter un élément de chauffe particulier permettant une chauffe rapide d'un volume de liquide grâce à une résistance chauffante sérigraphiée directement sur une face de l'élément complémentaire. La puissance thermique produite par la résistance sérigraphiée est directement transmise au travers de l'élément complémentaire au liquide se trouvant dans l'élément de chauffe, entre le corps et l'élément complémentaire.

Avantageusement il peut être fait en sorte que dans le procédé de commande, après avoir coupé l'alimentation de la résistance chauffante tout en maintenant la circulation du liquide, on ré-alimente la résistance chauffante dès que la température mesurée passe en dessous d'un troisième seuil de température inférieur au second et supérieur au premier et on recommence suivant le cas le cycle de coupure / ré-alimentation de la résistance chauffante jusqu'à avoir fourni à l'utilisateur la quantité de liquide souhaitée.

Cette caractéristique permet de délivrer en continu, de l'eau chaude à un débit donné, c'est à dire à un débit fixé et constant et cela tant que la quantité de liquide souhaitée n'est pas atteinte. Ce débit est inférieur à 2 cl/seconde et préférentiellement compris - entre 0.5 et 1.5 cl/seconde.

De plus, afin que l'utilisateur ne soit pas surpris de ne pas avoir de délivrance de liquide après sa commande (voir ci-dessus une attente de moins 5 secondes) avant que la température de liquide T n'ait atteint le premier seuil de température T1, on fait circuler le liquide pour la boisson dans le dispositif de chauffe à faible débit minimum (Dmin) inférieur au débit nominal D.

Le dimensionnement particulier de la pompe et de la résistance suivant l'invention fait que lorsque celles-ci sont alimentées, la puissance de chauffe est toujours suffisante pour permettre la chauffe du liquide circulant au débit constant, au-delà du premier seuil de température. Il n'y a donc pas de besoin d'interrompre le débit pour éviter de délivrer un liquide (de l'eau) à une température inférieure à la température du premier seuil.

Ceci permet d'avoir un débit non interrompu et de toujours avoir de l'eau chaude au-dessus du second seuil de température.

Ainsi, après avoir chauffé une partie de liquide au delà de la température de premier seuil, il est certain que tant que le circuit de transport est alimenté en liquide au débit donné et tant que la résistance est alimentée, alors le liquide sortant du dispositif est chauffé jusqu'à atteindre au moins le second seuil de température (généralement au delà de 70°C).

Grâce à cette caractéristique, le dispositif de l'invention permet de distribuer rapidement un liquide chauffé, cette distribution n'étant interrompue que sur commande de l'utilisateur par l'intermédiaire du moyen de commande ou suivant une programmation de la quantité voulue.

Etant donné que la puissance de chauffe et le débit fixe permettent d'atteindre le ratio de 2000 prédéfini, cela permet de ne pas avoir à contrôler la résistance en mode proportionnel.

Ainsi la résistance chauffante est commandée en tout ou rien par l'unité de commande, ce qui est particulièrement économique par rapport à une solution de régulation proportionnelle.

Avantageusement, le dispositif comporte un capteur de température relié à l'unité de commande et disposé pour capter une température sur une portion de circuit située entre l'élément de chauffe et l'extrémité libre. Il est à noter que « situé entre l'élément de chauffe et l'extrémité libre » signifie que le capteur peut être positionné sur l'élément de chauffe et également en aval de l'élément de chauffe, entre cet élément et l'extrémité libre.

Ce capteur de température est préférentiellement une thermistances à Coefficient de Température Négatif (C.T.N.) mais peut également être une thermistance à coefficient de température Positif (C.T.P.).

D'autres avantages de l'invention ressortiront clairement de la description qui en est faite ci-après, à titre indicatif et nullement limitatif, en référence aux dessins annexés, dans lesquels:

- la figure 1 représente une vue en perspective avant d'un dispositif de chauffe de liquide selon un mode de réalisation l'invention ;
- la figure 2 représente une vue en perspective arrière du dispositif de la figure 1 ;
- la figure 3 représente une vue éclatée en perspective de l'élément chauffant du dispositif de l'invention ;
- la figure 4 représente une vue en coupe d'un exemple de clapet obturateur du dispositif de l'invention ;
- la figure 5 représente une vue schématique du circuit de commande du dispositif de l'invention ;
- la figure 6 représente une vue d'un cycle de chauffe réalisé selon le procédé de l'invention et avec le dispositif de l'invention.

Comme annoncé précédemment, l'invention concerne un dispositif de fourniture de liquide chaud, ce liquide étant généralement de l'eau préalablement placée à température ambiante d'environ 20°C à 25°C (conditions pour lesquelles le dispositif est particulièrement adapté).

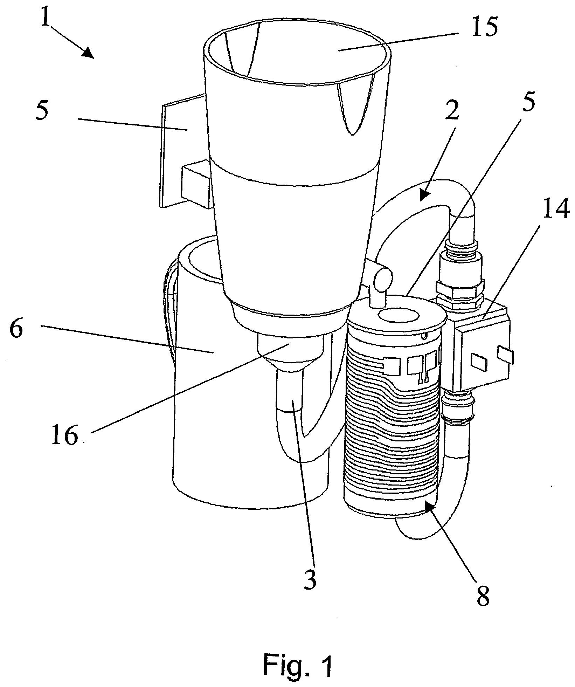

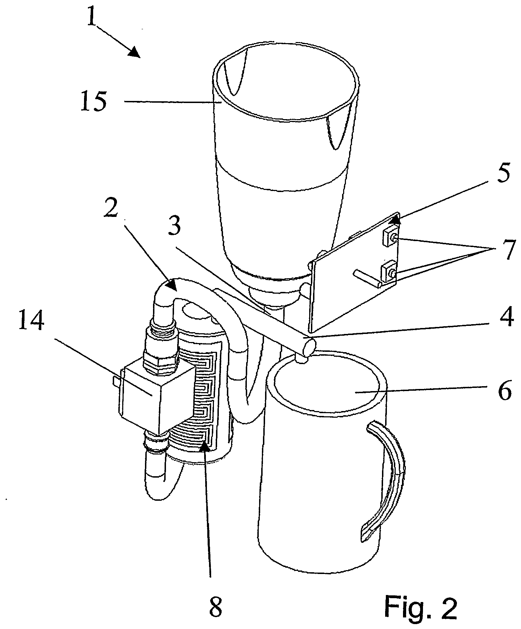

Le dispositif de fourniture d'un liquide 1 chaud représenté aux figures 1 et 2 comprend un circuit de transport de liquide 2 et une unité de commande électronique permettant de collecter des ordres utilisateur, des informations de fonctionnement du dispositif et de commander le dispositif. Ainsi l'unité de commande gère la mise en oeuvre du procédé de l'invention.

Etant donné que le dispositif de l'invention sert à préparer des boissons par fourniture d'eau chaude, les parties du circuit de transport 2 qui- sont en contact avec le liquide chauffé, c'est-à-dire l'eau chaude, sont en matériau(x) alimentaire(s) tel(s) que de l'inox, du plastique (par exemple du PA chargé de verre). L'eau chauffée et mise en circulation selon le procédé de l'invention est délivrée dans un récipient tel qu'une tasse et est propre à être bue par l'utilisateur.

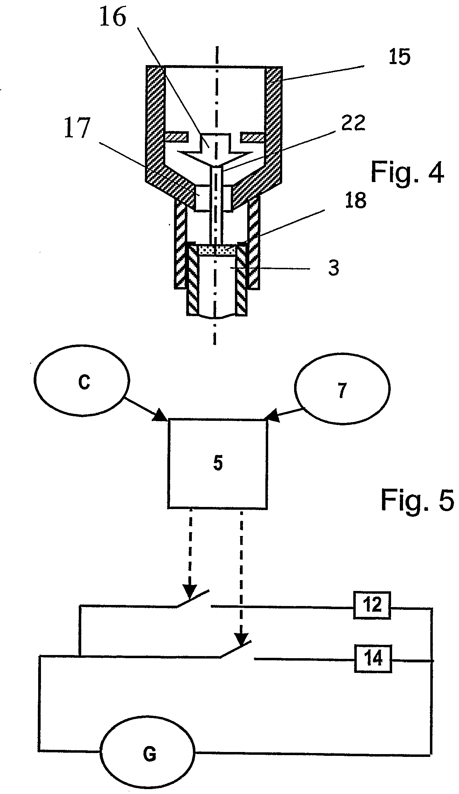

Le circuit de transport 2 possède une extrémité d'alimentation en liquide 3 reliée à un réservoir de liquide 15 par l'intermédiaire d'un clapet obturateur (décrit à la figure 4), et une autre extrémité libre 4 pour délivrer du liquide chauffé à un utilisateur.

Grâce à son réservoir, le dispositif de l'invention peut fonctionner sans avoir à être relié à un réseau externe d'alimentation en eau.

Une tasse est représentée en dessous de l'extrémité libre 4 du circuit de transport 2 pour recevoir le liquide chauffé et délivré.

Le circuit comprend également un élément de chauffe du liquide 8 disposé en série avec une pompe 14 et en aval de cette dernière.

Cette pompe 14 est adaptée pour assurer la circulation de liquide dans le circuit 2 à un débit fixe donné D, c'est à dire un débit constant. Le positionnement de la pompe 14 entre le réservoir 15 et l'élément de chauffe 8 permet d'alimenter la pompe en eau tempérée ce qui accroît sa durée de vie. D'autre part, grâce à cette position le liquide se trouvant dans l'élément de chauffe est toujours en légère surpression puisque placé en aval de la pompe. Cette légère -surpression -permet d'avoir momentanément une température de chauffe proche de la température d'ébullition sans risquer la formation massive de vapeur dans le circuit.

L'unité de commande est alimentée électriquement par un câble d'alimentation non représenté et relié au secteur. Comme cela est visible sur la figure 5, cette unité comporte un circuit électronique relié à un capteur de température C disposé sur l'élément de chauffe, à proximité de la sortie de liquide chauffé (c'est à dire en aval de la résistance chauffante 12 de l'élément de chauffe 8).

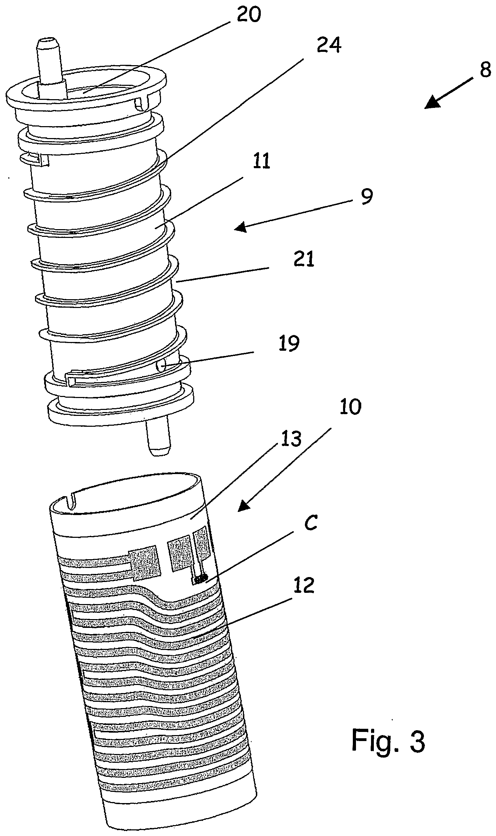

L'élément de chauffe 8 qui est représenté sur la figure 3 comporte un corps principal 9, associé à un élément complémentaire 10 recouvrant une face du corps principal 9 pour définir un volume de circulation du liquide, ledit élément complémentaire 10 présentant une résistance chauffante 12 sérigraphiée sur sa face opposée 13 à celle en regard du corps principal 9.

Le corps principal 9 présente une inertie thermique inférieure à celle de l'aluminium et l'élément complémentaire présente une résistance chauffante sérigraphiée sur sa face opposée 13 à celle en regard du corps principal.

Par inertie thermique (Ith), on entend la capacité d'un corps à emmagasiner plus ou moins de chaleur, ce qui peut s'exprimer par le produit de la valeur de sa densité massique (p) par la valeur de sa capacité thermique spécifique (cp).

$$Ith = \rho \times cp$$

Selon l'invention, le corps principal est une sorte "d'isolant thermique" en ce que, lors d'une phase de chauffe, il prend beaucoup moins de calories que le liquide en circulation et cela à cause de sa faible inertie thermique.

Pour cela, ce corps principal 9 est réalisé en plastique.

Avantageusement, l'élément complémentaire présente un fort coefficient de conduction thermique transversal, par exemple supérieur à 40. Par coefficient de conduction thermique transversal (Cth), on entend le rapport de la valeur du coefficient de conductibilité thermique (À) du matériau de l'élément complémentaire de chauffe que divise la valeur de son épaisseur (e) exprimée en millimètre.

$$Cth = \lambda / e$$

En d'autres termes, l'élément complémentaire transmet très rapidement par conduction l'énergie calorifique de la résistance chauffante au liquide, car soit l'épaisseur de l'élément complémentaire est réduite, de l'ordre de 3mm pour un matériau comme l'aluminium à fort coefficient de conductibilité, soit l'épaisseur est très réduite, de l'ordre du millimètre, pour un matériau de moindre coefficient de conductibilité comme l'inox.

Incidemment, le fait que la résistance chauffante soit de type sérigraphié et ceci en combinaison avec le bon coefficient de conduction thermique transversal fait que l'élément complémentaire de chauffe présente également une faible inertie thermique, diminuant les pertes énergétiques. Or, ce type d'élément de chauffe 8 ayant une résistance chauffante 12 sérigraphiée permet de réaliser une chauffe uniforme sur une grande surface en regard du liquide, ce qui augmente son efficacité de conductibilité thermique générale.

Autrement dit, l'élément de chauffe 8 comporte un corps principal 9 qui est relativement isolant thermiquement, et qui est recouvert par un élément complémentaire 10 chauffant rapidement. Cet élément complémentaire 10 transmet donc une énergie calorifique au liquide circulant dans l'espace qui le sépare du corps principal 9. Du fait du fort coefficient de transfert thermique par conduction de l'élément complémentaire, l'essentiel de l'énergie dissipée par la résistance sérigraphiée se transmet au liquide en circulation, plutôt que de s'accumuler dans l'élément complémentaire chauffant 10. De même, le corps principal de chauffe 9 possède une faible inertie thermique, de sorte qu'il emmagasine qu'une faible quantité d'énergie en provenance de l'élément complémentaire chauffant 10.

Il s'ensuit que le liquide reçoit très rapidement et de manière quasi intégrale l'énergie calorifique en provenance de la résistance sérigraphiée 12, de sorte que le chauffage du liquide est quasi instantané. De même, le corps principal ne participe pratiquement pas aux phénomènes de chauffage du liquide, de sorte que lorsque le dispositif ne fonctionne pas, il n'est pas nécessaire de fournir une quantité d'énergie pour qu'il reste à une température suffisante.

Autrement dit, la consommation du dispositif de chauffage en dehors des phases de chauffage proprement dites est nulle. De manière corollaire, la phase de chauffe de l'élément de chauffe 8 est extrêmement rapide dès le début de l'utilisation du dispositif, puisque le corps de chauffe n'a pas besoin de recevoir une quantité importante d'énergie pour arriver à température d'utilisation. Il n'y a donc pas de besoin d'avoir un phase de préchauffage avant que le moyen de commande 7 qui est un bouton marche arrêt ne soit actionné par l'utilisateur.

En pratique, l'élément de chauffe 8 peut avoir différentes géométries. Ainsi, dans une première forme de réalisation représentée sur la figure 3, le corps central est cylindrique, et reçoit sur sa face extérieure 11 l'élément complémentaire chauffant 10 formant un manchon annulaire.

Dans une autre forme de réalisation, le corps central peut être plat, et recevoir alors un élément chauffant plat également.

Pour augmenter l'efficacité du dispositif, on peut prévoir, comme c'est le cas sur la figure 3 que le corps principal 9 comporte une rainure permettant de définir avec l'élément complémentaire 10 un canal de circulation du liquide, augmentant ainsi le chemin parcouru par ce dernier au sein du dispositif de chauffe, et donc sa capacité à recevoir de l'énergie calorifique.

Dans le même but, la résistance sérigraphiée 12 peut être avantageusement localisée à l'aplomb du canal de circulation du liquide.

En pratique, lorsque l'élément de chauffe est de forme générale cylindrique, la rainure est hélicoïdale 21 comme sur la figure 3, tandis que lorsque le corps central de chauffe est plat, la rainure peut être alors en forme de spirale. La rainure hélicoïdale 21 est formée par une hélice 24 s'enroulant le long de la face 11 du corps 9.

Dans le même esprit, le corps principal de chauffe 9 est préférentiellement creux, de manière à encore limiter sa masse, donc son inertie thermique.

Le capteur de température C est agencé sur l'élément complémentaire.

Du fait que l'élément complémentaire 10 possède une forte conductibilité transversale et que le corps principal 9 et l'élément complémentaire 10 présentent une faible inertie thermique, la régulation électrique et/ou électronique est particulièrement dynamique, quasi instantanée, faisant que le liquide sort à une température plutôt stable avec une consommation énergétique minimisée.

La figure 3 illustre un mode de réalisation de l'élément de chauffe 8 dans lequel cet élément de chauffe est cylindrique.

Dans ce cas, l'élément de chauffe 8 comporte un corps principal central 9 associé à un élément complémentaire chauffant 10 sous la forme d'un manchon cylindrique. L'espace défini entre la face 11 extérieure du corps principal central 9 et la face intérieure du manchon 10, forme le volume en cylindre creux de circulation du liquide.

Dans la forme illustrée, la face extérieure du corps principal 9 comporte une rainure hélicoïdale 4 qui permet de définir avec le manchon un cheminement du liquide autour du corps principal. Toutefois, dans d'autres formes de réalisation, non représentées, formes de réalisation, non représentées, la face extérieure du corps principal 9 peut être totalement cylindrique, de manière à définir avec le manchon un volume de circulation d'épaisseur constante, s'étendant le long du cylindre. D'autres variantes peuvent être envisagées sans sortir du cadre de l'invention définie par les revendications. En pratique, le corps principal central 9 est relié à une alimentation en eau froide, c'est à dire à la sortie d'eau de la pompe. Cette arrivée est reliée à la face extérieure (face 11 du corps principal) par un canal 19 sensiblement radial, qui débouche sur la face extérieure 11.

Le corps principal central 9 est réalisé de préférence en matière plastique, ou plus généralement dans un matériau possédant une faible inertie thermique Ith, en tout cas inférieure à celle de l'aluminium de l'ordre de 2,30, de manière à n'emmagasiner qu'une faible partie de l'énergie de chauffage. Comme matériau susceptible de bien convenir dans la réalisation du corps principale 9 selon l'invention, on peut citer le polyamide (Ith=1,9), le polyacétal (Ith=2), le polypropylène (Ith=1,6), le poysulfone (Ith=1,4) ou le polycarbonate (Ith=1,5), ou le polyphénile sulfone PPS.

Dans la forme illustrée à la figure 3, on observe que le corps principal central 9 de chauffe présente un évidement central 20, destiné à diminuer encore plus son poids, donc son inertie thermique.

Dans cet exemple, la rainure 21 présente une profondeur de l'ordre de 3 millimètres, et une largeur d'environ 8 millimètres. Cette rainure 21, présente une géométrie hélicoïdale, d'un pas de 9 millimètres environ. En d'autres termes, la profondeur est plus faible que la largeur de telle sorte à "étaler" le liquide contre l'élément complémentaire chauffant 10 et ainsi favoriser le transfert de calories.

De préférence, le manchon ou élément complémentaire 10 est réalisé de telle sorte à présenter un fort coefficient de conduction thermique transversal et une faible inertie thermique.

L'épaisseur du manchon 10 est réduite au minimum en fonction du matériau de base pour diminuer cette inertie thermique, et pour augmenter les phénomènes de conduction. Parmi les matériaux donnant de bons résultats en termes de propriétés thermiques, on peut citer le cuivre, l'acier inoxydable, l'aluminium ou le verre. Il importe que le manchon 10 permette le dépôt d'une résistance électrique chauffante 12 sérigraphiée.

Le procédé de réalisation des pistes chauffantes consiste à sérigraphier une ou plusieurs couches de matériau isolant, puis une couche de pâte conductrice selon un chemin particulier, une couche pour former des plots de contact et enfin une ou plusieurs couches de matériau isolant. La puissance disponible peut être de l'ordre de 2000W à 3000W.

Cette résistance électrique 12 forme donc un ruban qui, dans la forme illustrée, est agencé sous forme de cercles transversaux avec décalage le long d'une même ligne longitudinale : toute la surface interne du manchon forme une plaque chauffante contre laquelle les rainures forcent le liquide à couler. Si désiré, la résistance sérigraphiée peut être hélicoïdale, et se trouver à l'aplomb des canaux définis par la rainure 21 du corps principal de chauffe 9. Dans ce cas, l'efficacité du chauffage et sa rapidité sont améliorées.

Ainsi, pour un manchon / élément complémentaire 10 en inox ayant un diamètre extérieur de l'ordre de 45 mm, l'épaisseur du manchon 10 peut être avantageusement comprise entre 0,5 et 1,5 millimètres, de préférence entre 0,8 et 1 millimètre. Son coefficient de conduction thermique transversal Cth est alors de l'ordre de 60. L'avantage de l'inox est sa résistance à la corrosion et sa tenue à haute température facilitant la réalisation d'éléments chauffants plats.

L'emploi d'un manchon / élément complémentaire 10 en aluminium est envisageable, mais avec des éléments chauffants sur support polyimide et des pâtes à plus faible température de cuisson. Par exemple, pour un manchon d'aluminium d'épaisseur de l'ordre de 3 millimètres permettant la réalisation d'éléments chauffants sérigraphiés, son coefficient de conduction thermique Cth est de l'ordre de 70.

En pratique, la circulation de l'eau dans le cheminement le long de la face externe 11 du corps principal 9 s'effectue par l'intermédiaire de la pompe, mais cette circulation pourrait également s'effectuer sans pompe, par gravité, toutefois, la pompe présente l'avantage de fournir un débit constant.

Utilement, un capteur de température C, telle qu'une résistance CTN, est rapportée contre l'élément complémentaire chauffant et est branchée à l'unité de commande électronique 5 de la figure 5.

Lors d'une première mise en marche avec un dispositif de chauffage froid, la régulation commande une pré-chauffe rapide, de l'ordre de 2 à 3 secondes, avant le début de la circulation d'eau. Cette pré-chauffe particulièrement rapide et quasiment non perceptible par l'utilisateur vient de la très faible inertie thermique globale du dispositif et de son efficacité de transfert thermique essentiellement vers l'eau contenue dans le circuit.

En pratique, les mesures effectuées avec ce type de dispositif de chauffe (équipé d'une résistance électrique de chauffe d'une puissance de 2 600 watts) permettent d'obtenir un chauffage d'environ 21 centilitres d'eau à une température comprise entre 70 et 80°C en 25 secondes seulement. La phase de pré-chauffe, seulement optionnelle, est particulièrement réduite, puisque le début d'écoulement peut intervenir au plus tard trois secondes environ après la mise en fonctionnement du dispositif de chauffe.

Il ressort de ce qui précède que l'élément de chauffe 8 du dispositif conforme à l'invention présente de multiples avantages, et notamment celui d'avoir une inertie thermique particulièrement réduite. Il s'ensuit donc que l'eau circulant dans le dispositif, chauffe de manière quasi instantanée lors de la mise sous tension de la résistance chauffante 12.

Lors de la mise hors tension de la résistance 12, l'élément de chauffe refroidit rapidement grâce à sa faible inertie thermique, préservant ainsi de l'échauffement l'environnement proche et facilitant également la régulation de la température de sortie.

La présence de la résistance sérigraphiée assure également une répartition de la puissance de chauffe sur une plus grande surface par rapport aux solutions existantes, de manière à optimiser le transfert thermique.

La figure 4 représente un exemple de clapet obturateur 16 installé sur une portion inférieure du réservoir. Ce clapet 16 est monté coulissant dans la portion inférieure du réservoir de façon à ce que dans une position, il vienne obturer le passage de fluide 17 et que dans une autre position, il vienne occulter ce même passage.

La liaison entre le réservoir et l'extrémité d'alimentation en liquide est réalisée par emboîtement de deux tubes male femelle.

Le clapet comporte une portion conique d'étanchéité et une tige 22 venant en appui contre une portion complémentaire de l'extrémité d'alimentation lorsque le réservoir est assemblé avec l'extrémité d'alimentation.

Lors de l'assemblage du réservoir 15 avec l'extrémité d'alimentation 3, la tige 22 du clapet vient en butée contre l'extrémité d'alimentation 3 forçant ainsi le clapet à passer de sa position d'obturation à sa position d'ouverture. Inversement, lorsque l'on sépare le réservoir de l'extrémité d'alimentation 3, le clapet retourne dans sa position d'obturation, par gravité et/ou sous la pression d'un ressort agissant sur le clapet, ou encore par la pression du liquide du réservoir.

Ainsi, le clapet obturateur 16 ouvre automatiquement le passage de fluide 17 du réservoir 15 vers la pompe 14 lorsque le réservoir 15 est relié à l'extrémité d'alimentation 3 et obture automatiquement ce passage 17 lorsque le réservoir 15 est débranché de l'extrémité d'alimentation 3.

Eventuellement un filtre 18 peut être situé à l'entrée de l'extrémité d'alimentation afin d'éviter que des particules polluantes n'entrent dans le circuit de transport de liquide 2.

La figure 5 représente un schéma de câblage du dispositif de l'invention.

L'unité de commande électronique 5 et/ou électrique comporte un moyen de commande 7 qui est un bouton de mise en route éventuellement couplé avec un moyen de présélection du volume de liquide à distribuer.

Dans le cas où le dispositif de l'invention comporte un moyen de présélection du volume de liquide à distribuer, celui-ci est préférentiellement une minuterie ajustable manuellement et gérée par l'unité de commande 5. En effet étant donné que le débit délivré par la pompe du dispositif est un débit fixe (constant), alors le volume de liquide effectivement délivré dépend uniquement et directement du temps de fonctionnement de la pompe à débit fixe.

Par exemple en ajustant la minuterie à 7 secondes, la pompe sera alors alimentée pendant 7 secondes permettant de délivrer environ 7 centilitres d'eau chaude à débit constant.

L'unité de commande est également reliée à un capteur de température C et à deux commutateurs agissants respectivement sur l'alimentation électrique de la résistance chauffante 12 et de la pompe 14.

De cette manière la pompe 14 et l'élément de chauffe 8 sont alimentés électriquement et commandés indépendamment l'un de l'autre par l'unité de commande 5.

Un générateur G (symbolisant l'alimentation électrique secteur) fournit l'énergie électrique à la résistance chauffante 12 et à la pompe 14 auxquels il est relié.

Le procédé de commande du dispositif est déclenché par une seule commande initiale exercée par l'utilisateur sur le moyen de commande 7 du dispositif. A réception de cette commande, l'unité de commande électronique gère l'ensemble des actions du procédé.

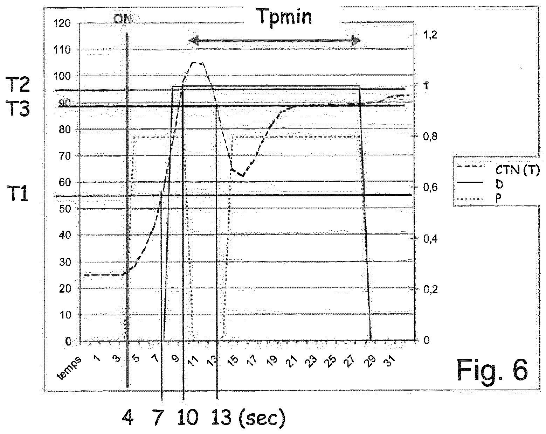

Le fonctionnement de ce circuit et la gestion de la chauffe et du débit par l'unité de commande électronique est décrite sur la figure 6.

La figure 6 représente un cycle de chauffe réalisé selon le procédé de l'invention et avec le dispositif de l'invention. En abscisse est représentée l'échelle de temps en seconde.

L'axe des ordonnées de gauche numéroté de 0 à 120°C correspond à la courbe de température en degrés Celsius indiquée par la CTN au cours du temps. Cette courbe est en fait une courbe représentative de la température du liquide ayant transité par l'élément de chauffe 8 en fonction du temps.

La courbe D correspond au débit instantané de liquide généré par la pompe en fonction du temps. La valeur numérique correspondante à cette courbe D est indiquée- sur l'axe des ordonnées de droite numéroté de 0 à 1.2 centilitres par seconde. Dans cet exemple de fonctionnement le débit fixe de la pompe en fonctionnement est réglé à 1 centilitres par seconde.

La troisième courbe notée P est la courbe d'alimentation électrique de la résistance chauffante 12 en fonction du temps. Pour cette courbe aucune unité de puissance électrique n'est donnée. Toutefois les points de cette courbe situés en face du 0 de l'axe des ordonnées de gauche, indiquent que la résistance n'est pas alimentée. Inversement, les points de cette courbe situés en face du 78 de l'axe des ordonnées de gauche, indiquent que la résistance est alimentée avec une puissance électrique d'environ 2600 watts.

Les différentes mesures débutent au temps 0 secondes. Dans une première phase, allant de 0 à 4 secondes la température mesurée du liquide est de 25 °C, c'est la température ambiante du liquide à réchauffer.

Au temps 4 secondes, l'utilisateur commande, par action sur le moyen de commande 7, la mise en route du dispositif (cet instant est symbolise par la référence « ON ») et ajuste un temps de minuterie « Tpmin » de 21 secondes qui correspond à 21 centilitres de liquide chauffé.

A ce temps 4 secondes, la résistance de chauffe 12 est alors alimentée à 2600 watts et la température du liquide donnée par la courbe « CTN (T) » s'élève rapidement au-delà de 25°C.

Du temps 4 secondes au temps 7 secondes, c'est à dire en 3 secondes la température du liquide s'est élevée de 25°C à 55°C.

Le premier seuil de température T1 étant réglé à 55°C, l'unité de commande électronique qui reçoit les informations de température commande alors la mise en route de la pompe à son débit nominal de 1 centilitre par seconde pour une durée égale au temps de minuterie « Tpmin » sélectionné par l'utilisateur. Le liquide circule alors dans le circuit de transport pendant 21 secondes, c'est à dire du temps 7 secondes au temps 28 secondes. Il est à noter que le temps « Tpmin » intervient dans le procédé de commande de l'invention pour définir le temps de mise en fonction de la pompe à partir du passage du premier seuil T1.

Malgré la mise en fonctionnement de la pompe, la température du liquide continue à s'accroître et arrive au second seuil T2 ajusté à 95°C au temps 10 secondes. Cette croissance de la température alors que la pompe est en fonctionnement est liée au fait que le ratio R de la puissance de chauffe exprimée en Watts divisée par le débit fixe donné de liquide généré par la pompe est supérieur à 2000.

Dès la détection du second seuil T2 qui est réglé à 95°C, l'unité de commande électronique 5 coupe l'alimentation de la résistance de chauffe 12.

Du temps 10 secondes où intervient cette coupure au temps 11 secondes, la température continue à croître jusqu'à atteindre une pointe de 105°C au temps 11 secondes.

Au-delà de ce temps 11 secondes, la température du liquide diminue et passe à environ 89°C qui est le troisième seuil T3, au temps 13 secondes. Ce seuil T3 est préférentiellement calculé par soustraction d'une valeur de delta de température au second seuil T2. Ainsi, le troisième seuil T3 est toujours légèrement inférieur au second seuil T2, et dans le cas de l'exemple illustré, ce delta de température est de 1°C. Ce delta peut être compris entre 1°C et 10°C. Le delta de température est choisi le plus faible possible car plus ce delta est réduit et plus la variation de la température de l'eau à la sortie du dispositif de chauffe sera faible. Idéalement la température de l'eau à la sortie du dispositif devrait tendre vers une constante.

A compter de T3, l'unité de commande ré-alimente alors la résistance électrique 12 comme cela est visible sur la courbe de puissance de chauffe P qui passe de 0 à 2600 watts au temps 13 secondes.

La température du liquide continue à décroître par inertie thermique puis remonte alors rapidement après avoir eu une température minimale de 62 °C jusqu'à tendre vers une température proche de 90°C.

Puis la fin du cycle de chauffe selon le procédé de l'invention s'interromps au temps 28 secondes où l'unité de commande coupe simultanément l'alimentation de la résistance de chauffe et de la pompe.

Alternativement, le cycle de chauffe aurait pu être prolongé sans arrêter la pompe juste en continuant à mesurer l'évolution de la température du liquide et en alimentant la résistance lorsque la température décroît en dessous de T3 et en coupant cette alimentation lorsque la température du liquide croît au-dessus de T2.

Une option possible du procédé de commande du dispositif peut consister en ce qu'avant que la température du liquide T n'ait atteint le premier seuil de température T1, on fait circuler le liquide dans ledit dispositif de chauffe 1, à un débit minimum Dmin inférieur au débit nominal D.

Cette caractéristique permet de distribuer une faible quantité de liquide non encore suffisamment chaud (inférieure à T1) dès que l'utilisateur effectue la commande, lui donnant ainsi l'impression que le dispositif est instantanément disponible. Dans tous les cas, la température du liquide sera supérieure au seuil T1 dans les 3 secondes suivant la commande de l'utilisateur.

Selon des options de l'invention, on choisit :

- le premier seuil de température T1 entre 50°C et 70°C et préférentiellement à 55°C ;
- le second seuil de température T2 entre 80°C et 100°C et préférentiellement à 90°C ;
- le troisième seuil de température T3 inférieur à T2 d'une valeur delta de température comprise entre 1 et 10°C et préférentiellement de 1°C.

**Revendications**

1. Procédé de préparation de boisson par fourniture d'eau chaude par un dispositif de préparation de boisson comprenant un circuit de transport de liquide (2) comprenant :

    - un élément de chauffe (8) présentant une résistance chauffante (12) ;
    - une pompe (14) disposée en série avec l'élément de chauffe (8) et adaptée pour assurer la circulation de liquide dans le circuit (2),

    Ledit dispositif de préparation de boisson comprenant une unité de commande électronique (5) dotée d'un moyen de commande (7),
    le procédé, après actionnement par un utilisateur du moyen de commande (7), comprend les étapes suivantes :

    - on chauffe du liquide en alimentant la résistance chauffante à une puissance électrique moyenne prédéfinie jusqu'à un premier seuil de température prédéterminée (T1),
    - on maintient la chauffe du liquide,
    - on prédéfinit un ratio (R) entre ladite puissance électrique moyenne prédéfinie et un débit nominal constant donné (D), le ratio (R) ayant une valeur constante et prédéfinie comprise entre 2000 et 4000, la puissance électrique moyenne prédéfinie de la résistance chauffante (12) étant exprimée en Watts et le débit nominal constant donné (D) étant exprimé en centilitres par seconde,

    **caractérisé en ce que**

    - dès que le premier seuil de température prédéterminé (T1) est atteint, on fait circuler le liquide pour la boisson dans ledit élément de chauffe (8) avec le débit nominal constant donné (D), ledit débit nominal constant donné (D) étant inférieur à 2 cl/s,

- la puissance électrique moyenne prédéfinie de la résistance chauffante (12) est inférieure à 3500 Watts,

- pendant l'étape de circulation du liquide dans l'élément de chauffe (8), le liquide est chauffé par la résistance chauffante (12) jusqu'à un second seuil de température (T2) et

- la mise en circulation du liquide dans l'élément de chauffe est réalisée par la mise en route de la pompe (14) à son débit nominal constant donné (D) pour une durée égale à un temps de minuterie « Tpmin » sélectionné par l'utilisateur, ledit temps « Tpmin » définissant le temps de mise en fonction de la pompe à partir du passage du premier seuil (T1).

2. Procédé selon la revendication 1, **caractérisé en ce que** ledit débit nominal constant donné (D) est compris entre 0.5 et 1.5 cl/seconde.

3. Procédé selon l'une quelconque des revendications 1 à 2, **caractérisé en ce qu'**on coupe l'alimentation de la résistance chauffante dès que la température mesurée (T) est supérieure au second seuil (T2), tout en maintenant la circulation du liquide, et on coupe la circulation du fluide quand on a fourni à l'utilisateur la quantité de liquide souhaitée.

4. Procédé selon la revendication 3, **caractérisé en ce qu'**après avoir coupé l'alimentation de la résistance chauffante (12) tout en maintenant la circulation du liquide, on ré-alimente la résistance chauffante (12) dès que la température mesurée (T) passe en dessous d'un troisième seuil de température (T3) inférieur au second (T2) et supérieur au premier (T1) et on recommence, suivant le cas, le cycle de coupure / ré-alimentation de la résistance chauffante jusqu'à avoir fourni à l'utilisateur la quantité de liquide souhaitée.

5. Procédé selon l'une quelconque des revendications 1 à 4, **caractérisé en ce qu'**avant que la température du liquide (T) n'ait atteint le premier seuil de température (T1), on fait circuler le liquide pour la boisson dans ledit dispositif de chauffe (1), à un faible débit minimum (Dmin) inférieur au débit nominal (D).

6. Procédé selon l'une quelconque des revendications 1 à 5, **caractérisé en ce que** le premier seuil de température (T1) est compris entre 50°C et 70°C et est préférentiellement de 55°C.

7. Procédé selon l'une quelconque des revendications 3 à 6, **caractérisé en ce que** le second seuil de température (T2) est compris entre 80°C et 100°C et est préférentiellement de 90°C.

8. Procédé selon l'une quelconque des revendications 4 ou 7, combinée aux revendications 5 et 6, **caractérisé en ce que** le troisième seuil de température (T3) est inférieur au second seuil (T2) d'une valeur delta comprise entre 1 et 10°C et préférentiellement de 1°C.

9. Procédé selon l'une quelconque des revendications 1 à 8, **caractérisé en ce que** l'on commande la pompe (14) et l'élément de chauffe (8) indépendamment l'un de l'autre, par l'unité de commande électronique (5) dotée du moyen de commande (7) et d'une source alimentation électrique, le procédé étant déclenché par une seule commande initiale exercée par l'utilisateur sur le moyen de commande (7), et à réception de cette commande, l'unité de commande électronique gère l'ensemble des actions du procédé.

10. Dispositif (1) de préparation de boisson par fourniture d'eau chaude comprenant :

- un circuit de transport de liquide (2) ;
- une unité de commande électronique (5) dotée d'une source d'alimentation électrique et d'un moyen de commande du dispositif (7) ;

le circuit de transport (2) comprenant :

un élément de chauffe du liquide (8) comportant une résistance chauffante (12), l'élément de chauffe étant disposé en série avec une pompe (14) adaptée pour assurer la circulation de liquide dans le circuit (2) à un débit nominal constant donné (D), la pompe (14) et l'élément de chauffe (8) étant alimentés électriquement et commandés indépendamment l'un de l'autre par l'unité de commande (5) ; la pompe et l'élément de chauffe sont dimensionnés de telle manière que le ratio (R) de la puissance électrique moyenne prédéfinie(P) de la résistante chauffante (12), exprimée en Watts, divisée par le débit nominal constant donné (D) pouvant être assuré par la pompe (14) du circuit de transport (2) et exprimé en centilitre par seconde, présente une valeur constante et prédéfinie comprise entre 2000 et 4000, **caractérisé en ce que**

la résistance chauffante (12) est configurée pour chauffer le liquide jusqu'à un premier seuil de température (T1) et jusqu'à un deuxième seuil de température (T2) pendant la circulation du liquide dans le circuit (2) via la pompe (14) à son débit nominal contant donné(D) pour une durée égale à un temps de minuterie « Tpmin » sélectionné par l'utilisateur, ledit temps « Tpmin » définissant le temps de mise en fonction de la pompe à partir du passage du premier seuil T1, et **en ce que** la puissance électrique moyenne prédéfinie de la résistance chauffante (12) est inférieure à 3500 Watts, et **en ce que** l'unité de commande électronique (5) est configurée pour gérer l'ensemble des actions d'un procédé selon la revendication 9.

11. Dispositif (1) selon la revendication 10, **caractérisé en ce que** l'élément de chauffe comporte un corps principal (9), associé à un élément complémentaire (10) recouvrant une face du corps principal (9) pour définir un volume de circulation du liquide, ledit élément complémentaire (10) présentant une résistance chauffante (12) sérigraphiée sur sa face opposée (13) à celle en regard du corps principal (9).

12. Dispositif (1) selon l'une quelconque des revendications 10 à 11, **caractérisé en ce que** la résistance chauffante (12) est commandée en tout ou rien par l'unité de commande (5).

13. Dispositif (1) selon l'une quelconque des revendications 10 à 12, **caractérisé en ce qu'**il comporte un capteur de température (C) relié à l'unité de commande (5) et disposé pour capter une température (T) sur une portion de circuit située entre l'élément de chauffe (8) et une extrémité libre (4) du circuit de transport de liquide (2).

14. Dispositif (1) selon la revendication 13, **caractérisé en ce que** le capteur de température (C) est une thermistance à Coefficient de Température Négatif (C.T.N.).

15. Dispositif (1) selon l'une quelconque des revendications 10 à 13, **caractérisé en ce que** le circuit de transport (2) comporte un réservoir de liquide (15) relié en série avec la pompe (14) par une extrémité d'alimentation du circuit (3) et alimentant le circuit (2) en liquide à chauffer.

16. Dispositif (1) selon la revendication 15, **caractérisé en ce que** ledit réservoir (15) est amovible et doté d'un clapet obturateur (16) ouvrant automatiquement un passage de fluide (17) du réservoir (15) vers la pompe (14) lorsque le réservoir (15) est relié à l'extrémité d'alimentation (3) et obturant automatiquement ce passage (17) lorsque le réservoir (15) est débranché de l'extrémité d'alimentation (3).

17. Dispositif (1) selon l'une quelconque des revendications 11 à 16, **caractérisé en ce que** le corps principal présente une inertie thermique inférieure à celle de l'aluminium.

18. Dispositif (1) selon l'une quelconque des revendications 11 à 17, **caractérisé en ce que** l'élément complémentaire (10) est réalisé en un matériau métallique présentant un coefficient de conduction thermique transversal (Cth) supérieur à 40.

19. Dispositif (1) selon l'une quelconque des revendications 11 à 18 combinée avec la revendication 14, **caractérisé en ce que** le corps principal (9) comporte une rainure permettant de définir avec l'élément complémentaire (10) un canal (4) de circulation du liquide.

20. Dispositif (1) selon la revendication 19, **caractérisé en ce que** le corps principal (1) est plat et **en ce que** la rainure est en forme de spirale.

21. Dispositif (1) selon l'une quelconque des revendications 11 à 20 combinée avec la revendication 14, **caractérisé en ce que** le corps principal (9) est cylindrique, et reçoit sur sa face extérieure l'élément complémentaire (10) sous forme de manchon.

**Patentansprüche**

1. Verfahren zur Getränkezubereitung durch Bereitstellen von heißem Wasser durch eine Getränkezubereitungsvorrichtung, die einen Kreislauf zum Flüssigkeitstransport (2) umfasst, umfassend:

- ein Heizelement (8), das einen Heizwiderstand (12) aufweist;
- eine Pumpe (14), die in Reihe mit dem Heizelement (8) angeordnet ist und ausgeführt ist, um für die Flüssigkeitszirkulation in dem Kreislauf (2) zu sorgen,
- wobei die Getränkezubereitungsvorrichtung eine elektronische Steuereinheit (5) umfasst, die mit einem Steuermittel (7) versehen ist, wobei das Verfahren nach der Betätigung des Steuermittels (7) durch einen Benutzer die folgenden Schritte umfasst:

- man erwärmt Flüssigkeit, indem man den Heizwiderstand bis zu einem ersten vorbestimmten Temperaturgrenzwert (T1) mit einer vorbestimmten mittleren elektrischen Leistung versorgt,
- man hält die Erwärmung der Flüssigkeit aufrecht
- man definiert vorab ein Verhältnis (R) zwischen der vorbestimmten mittleren elektrischen Leistung und einer gegebenen konstanten Nenndurchflussmenge (D), wobei das Verhältnis (R) einen konstanten und vordefinierten Wert zwischen 2000 und 4000 aufweist, wobei die vorbestimmte mittlere elektrische Leistung des Heizwiderstandes (12) in Watt ausgedrückt wird, und

die gegebene konstante Nenndurchflussmenge (D) in Zentiliter pro Sekunde ausgedrückt wird,

**dadurch gekennzeichnet, dass**

- sobald der erste vorbestimmte Temperaturgrenzwert (T1) erreicht ist, man die Flüssigkeit für das Getränk in dem Heizelement (8) mit der gegebenen konstanten Nenn-durchflussmenge (D) zirkulieren lässt, wo-bei die gegebene konstante Nenndurch-flussmenge (D) kleiner als 2 cl/s ist,
- die vorbestimmte mittlere elektrische Leistung des Heizwiderstandes (12) kleiner als 3500 Watt ist,
- während des Zirkulationsschrittes der Flüssigkeit in dem Heizelement (8) die Flüssigkeit durch den Heizwiderstand (12) bis zu einem zweiten Temperaturgrenzwert (T2) erwärmt wird, und
- die Zirkulation der Flüssigkeit in dem Heizelement durch Einschalten der Pumpe (14) mit ihrer gegebenen konstanten Nenndurchflussmenge (D) für eine Dauer gleich einer Timer-Zeit "Tpmin" gewährleistet wird, die von dem Benutzer ausgewählt wird, wobei die "Tpmin" Zeit die Inbetriebnahmezeit der Pumpe ab dem Überschreiten des ersten Grenzwertes (T1) defniert.

2. Verfahren nach Anspruch 1, **dadurch gekennzeichnet, dass** die gegebene konstante Nenndurchflussmenge (D) zwischen 0,5 und 1,5 cl/Sekunde enthalten ist.

3. Verfahren nach einem der Ansprüche 1 bis 2, **dadurch gekennzeichnet, dass** man die Versorgung des Heizwiderstandes unterbricht, sobald die gemessene Temperatur (T) über dem zweiten Grenzwert (T2) liegt, wobei die Zirkulation der Flüssigkeit beibehalten wird, und man die Zirkulation der Flüssigkeit unterbricht, wenn man dem Benutzer die gewünschte Menge an Flüssigkeit geliefert hat.

4. Verfahren nach Anspruch 3, **dadurch gekennzeichnet, dass** nachdem die Versorgung des Heizwiderstandes (12) unter Beibhealtung der Zirkulation der Flüsskeit unterbrochen worden ist, man den Heizwiderstand (12) erneut versorgt, sobald die gemessene Temperatur (T) unter einem dritten Grenzwert (T3) unter dem zweiten Grenzwert (T2) und über dem ersten Grenzwert (T1) liegt, und man fall-weise erneut den Untrbrechungs-/Neuversorgungs-zyklus des Heizwiderstandes startet, bis man dem Benutzer die gewünschte Menge an Flüssigkeit geliefert hat.

5. Verfahren nach einem der Ansprüche 1 bis 4, dadurch gekennzeichnet, dass bevor die Temperatur der Flüssigkeit (T) den ersten Temperaturgrenzwert (T1) nicht erreicht hat, man die Flüssigkeit für das Getränk in der Heizvorrichtung (1) mit einer geringen Durchflussmenge (Dmin) unter der Nenndurchflussmenge (D) zirkulieren lässt.

6. Verfahren nach einem der Ansprüche 1 bis 5, dadu-rch gekennzeichnet, dass der erste Temperaturgrenzwert (T1) zwischen 50°C und 70°C enthalten ist und vorzugsweise 55°C ist.

7. Verfahren nach einem der Ansprüche 3 bis 6, dadu-rch gekennzeichnet, dass der zweite Temperaturgrenzwert (T2) zwischen 80°C und 100°C enthalten ist und vorzugsweise 90°C ist.

8. Verfahren nach einem der Ansprüche 4 oder 7, kombiniert mit den Ansprüchen 5 und 6 dadurch ge-kennzeichnet, dass der dritte Temperaturgrenzwert (T3) um einen Deltawert zwischen 1 und 10°C, und vorzugsweise um 1°C kleiner ist, als der zweite Temperaturgrenzwert (T2).

9. Verfahren nach einem der Ansprüche 1 bis 8, dadu-rch gekennzeichnet, dass man die Pumpe (14) und das Heizelement (8) unabhängig voneinander durch die elektronische Steuereinheit (5) steuert, die mit dem Steuermittel (7) und einer Stromversorgungsquelle versehen ist, wobei das Verfahren durch einen einzigen ersten Befehl ausgelöst wird, der von dem Benutzer an dem Steuermittel (7) ausgeführt wird, und bei Empfang dieses Befehls die elektronische Steuereinheit sämtliche Aktionen des Verfahrens verwaltet.

10. Vorrichtung (1) zur Getränkezubereitung durch Bereitstellen von heißem Wasser, umfassend:

- einen Kreislauf zum Flüssigkeitstransport (2);
- eine elektronische Steuereinheit (5), die mit einer Stromversorgungsquelle und mit einem Steuermittel (7) versehen ist;

wobei der Kreislauf zum Flüssigkeitstransport (2) umfasst:

ein Heizelement für die Flüssigkeit (8), das einen Heizwiderstand (12) umfasst, wobei das Heizelement in Reihe mit eine Pumpe (14) angeordnet ist, die ausgeführt ist, um für die Flüssigkeitszirkulation in dem Kreislauf (2) mit einer gegebenen konstanten Nenndurchflussmenge (D) zu sorgen, wobei die Pumpe (14) und das Heizelement (8) unabhängig voneinander durch die Steuereinheit (5) elektrisch versorgt und gesteuert werden; die Pumpe und das Heizelement derart bemessen sind, dass das Verhältnis (R) der vordefinierten mittleren elektrischen Leistung (P) des Heizwiderstandes (12), ausgedrückt in Watt, geteilt durch die gegebene konstante Nenndurchflussmenge (D), die von der Pumpe (14) des Transportkreislaufs (2) gewährleistet werden kann, und in Zentiliter pro Sekunde ausgedrückt wird, einen konstant und vordefinierten Wert zwischen 2000 und 4000 aufweist,

**dadurch gekennzeichnet, dass**

der Heizwiderstand (12) konfiguriert ist, um während der Zirkulation der Flüssigkeit in dem Kreislauf (2) über die Pumpe (14) mit ihrer gegebenen konstanten Nenndurchflussmenge (D) für eine Dauer gleich einer Timer-Zeit "Tpmin", die von einem Benutzer ausgewählt wird, die Flüssigkeit bis zu einem ersten Temperaturgrenzwert (T1) und bis zu einem zweiten Temperaturgrenzwert (T2) zu erwärmen, wobei die "Tpmin" Zeit die Zeit der Inbetriebnahme der Pumpe ab dem Überschreiten des ersten Grenzwertes (T1) definiert, und dadurch, dass die vordefinierte mittlere elektrische Leistung des Heizwiderstandes (12) kleiner als 3500 Watt ist und dadurch, dass die elektronische Steuereinheit (5) konfiguriert ist, um sämtliche Aktionen des Verfahrens nach Anspruch 9 zu verwalten.

11. Vorrichtung (1) nach Anspruch 10, **dadurch gekennzeichnet, dass** das Heizelement einen Hauptkörper (9) umfasst, der einem ergänzenden Element (10) zugeordnet ist, das eine Seite des Hauptkörpers (9) abdeckt, um ein Zirkulationsvolumen für die Flüssigkeit zu definieren, wobei das ergänzende Element (10) einen Heizwiderstand (12) aufweist, der auf dessen Seite (13) gegenüber jener siebgedruckt ist, die dem Hauptkörper (9) zugewandt ist.

12. Vorrichtung (1) nach einem der Ansprüche 10 bis 11, **dadurch gekennzeichnet, dass** der Heizwiderstand (12) in Form von "alles oder nichts" durch die Steuereinheit (5) gesteuert wird.

13. Vorrichtung (1) nach einem der Ansprüche 10 bis 12, **dadurch gekennzeichnet, dass** sie einen Temperatursensor (C) umfasst, der mit der Steuereinheit (5) verbunden ist und angeordnet ist, um eine Temperatur (T) auf einem Kreislaufabschnitt zu erheben, der sich zwischen dem Heizelement (8) und einem freien Ende (4) des Kreislaufs zum Flüssigkeitstransport (2) befindet.

14. Vorrichtung (1) nach nach Anspruch 13, **dadurch gekennzeichnet, dass** der Temperatursensor (C) ein Thermistor mit einem negativen Temperaturkoeffizienten (C.T.N) ist.

15. Vorrichtung (1) nach einem der Ansprüche 10 bis 13, **dadurch gekennzeichnet, dass** der Transportkreislauf (2) einen Flüssigkeitsbehälter (15) umfasst, der über ein Versorgungsende des Kreislaufes (3) in Reihe mit der Pumpe (14) verbunden ist und den Kreislauf (2) mit der zu erwärmenden Flüssigkeit versorgt.

16. Vorrichtung (1) nach Anspruch 15, **dadurch gekennzeichnet, dass** der Behälter (15) abnehmbar ist und mit einer Verschlussklappe (16) versehen ist, die automatisch einen Flüssigkeitsdurchlass (17) vom Behälter (15) zur Pumpe (14) öffnet, wenn der Behälter (15) mit dem Versorgungsende (3) verbunden ist, und die diesen Durchlass (17) automatisch verschließt, wenn der Behälter (15) von dem Versorgungsende (3) getrennt ist.

17. Vorrichtung (1) nach einem der Ansprüche 11 bis 16, **dadurch gekennzeichnet, dass** der Hauptkörper eine Wärmeträgheit kleiner als jene von Aluminium aufweist.

18. Vorrichtung (1) nach einem der Ansprüche 11 bis 17, **dadurch gekennzeichnet, dass** das ergänzende Element (10) aus einem metallischen Material gefertigt ist, das einen Wärmeleitkoeffizienten (Cth) von über 40 aufweist.

19. Vorrichtung (1) nach einem der Ansprüche 11 bis 18, kombiniert mit Anspruch 14, **dadurch gekennzeichnet, dass** der Hauptkörper (9) eine Nut umfasst, die es ermöglicht, mit dem ergänzenden Element (10) einen Kanal (4) zur Zirkulation der Flüssigkeit zu definieren.

20. Vorrichtung (1) nach Anspruch 19, **dadurch gekennzeichnet, dass** der Hauptkörper (1) flach ist und dass die Nut in Form einer Spirale ist.

21. Vorrichtung (1) nach einem der Ansprüche 11 bis 20, kombiniert mit Anspruch 14, **dadurch gekennzeichnet, dass** der Hauptkörper (9) zylindrisch ist und auf seiner Außenseite das ergänzende Element (10) in Form einer Muffe aufnimmt.

**Claims**

1. Method for preparing drinks by supplying hot water by means of a device for preparing drinks comprising a liquid transport circuit (2) comprising:

   - a heating element (8) having a heating resistance (12);
   - a pump (14) arranged in series with the heating element (8) and adapted to provide for the circulation of liquid in the circuit (2),

- said device for preparing drinks comprising an electronic control unit (5) provided with a control means (7),

the method, after actuating by a user of the control means (7), comprises the following steps:

- liquid is heated by supplying the heating resistance at a predefined average electrical power until a first predetermined temperature threshold (T1),
- the heating of the liquid is maintained,
- a ratio (R) is predefined between said predefined average electrical power and a given constant nominal rate (D), with the ratio (R) having a constant and predefined value between 2000 and 4000, with the predefined average electrical power of the heating resistance (12) being expressed in Watts and the given constant nominal rate (D) being expressed in centilitres per second,

**characterised in that**

- as soon as the first predetermined temperature threshold (T1) is reached, the liquid for the drink is made to circulate in said heating element (8), with the given constant nominal rate (D), said given constant nominal rate (D) being less than 2 cl/s,
- the predefined average electrical power of the heating resistance (12) is less than 3500 Watts,
- during the step of circulation of the liquid in the heating element (8), the liquid is heated by the heating resistance (12) to a second temperature threshold (T2) and
- the putting into circulation of the liquid in the heating element is carried out by turning on the pump (14) at its given constant nominal rate (D) for a duration equal to a timer time "Tpmin" selected by the user, said "Tpmin" time defining the starting up time of the pump starting from the crossing of the first threshold (T1).

2. Method according to claim 1, **characterised in that** said given constant nominal rate (D) is between 0.5 and 1.5 cl/second.

3. Method according to any of claims 1 to 2, **characterised in that** the power supply of the heating resistance is cut off as soon as the measured temperature (T) is greater than the second threshold (T2), while still maintaining the circulation of the liquid, and the circulation of the fluid is cut off when the desired quantity of liquid has been supplied to the user.

4. Method according to claim 3, **characterised in that** after having cut off the power supply of the heating resistance (12) while still maintaining the circulation of the liquid, the heating resistance (12) is supplied again as soon as the measured temperature (T) falls below a third temperature threshold (T3) that is less than the second (T2) and greater than the first (T1) and, according to the case, the cut off / supplying again cycle of the heating resistance is started again until the user has been supplied with the desired quantity of liquid.

5. Method according to any of claims 1 to 4, **characterised in that** before the temperature of the liquid (T) has reached the first temperature threshold (T1), the liquid for the drink is made to circulate in said heating device (1), at a low rate (Dmin) less than the nominal rate (D).

6. Method according to any of claims 1 to 5, **characterised in that** the first temperature threshold (T1) is between 50°C and 70°C and is preferably 55°C.

7. Method according to any of claims 3 to 6, **characterised in that** the second temperature threshold (T2) is between 80°C and 100°C and is preferably 90°C.

8. Method according to any of claims 4 or 7, combined with claims 5 and 6, **characterised in that** the third temperature threshold (T3) is less than the second threshold (T2) by a delta value between 1 and 10°C and preferably 1°C.

9. Method according to any of claims 1 to 8, **characterised in that** the pump (14) and the heating element (8) are controlled independently one from the other, by the electronic control unit (5) provided with a control means (7) and with a source of electrical power, with the method being triggered by a single initial control exerted by the user on the control means (7), and upon receiving this control, the electronic control unit manages all of the actions of the method.

10. Device (1) for preparing drinks by supplying hot water comprising:

- a liquid transport circuit (2);
- an electronic control unit (5) provided with a source of electrical power and with a means for controlling the device (7);

with the transport circuit (2) comprising:

a heating element of the liquid (8) comprising a heating resistance (12), with the heating element being arranged in series with a pump (14) adapted to provide for the circulation of liquid in the circuit (2) at a given constant nominal rate (D), the pump (14) and the heating element (8) being electrically powered and controlled independently from one another by the control unit (5); the pump and the heating element are dimensioned in such a way that the ratio (R) of the predefined average electrical power (P) of the heating resistance (12), expressed in Watts, divided by the given constant nominal rate (D) able to be provided by the pump (14) of the transport circuit (2) and expressed in centilitres per second, has a constant and predefined value between 2000 and 4000, **characterised in that** the heating resistance (12) is configured to heat the liquid to a first temperature threshold (T1) and to a second temperature threshold (T2) during the circulation of the liquid in the circuit (2) via the pump (14) at its given constant nominal rate (D) for a duration equal to a timer time "Tpmin" selected by the user, said "Tpmin" time defining the starting up time of the pump starting from the crossing of the first threshold T1, and **in that** the predefined average electrical power of the heating resistance (12) is less than 3500 Watts, and **in that** the electronic control unit (5) is configured to manage all of the actions of a method according to claim 9.

11. Device (1) according to claim 10, **characterised in that** the heating element comprises a main body (9), associated with an additional element (10) covering one face of the main body (9) in order to define a volume of circulation of the liquid, said additional element (10) having a heating resistance (12) silk screened on its face opposite (13) that facing the main body (9).

12. Device (1) according to any of claims 10 to 11, **characterised in that** the heating resistance (12) is controlled all-or-nothing by the control unit (5).

13. Device (1) according to any of claims 10 to 12, **characterised in that** it comprises a temperature sensor (C) connected to the control unit (5) and arranged to capture a temperature (T) on a portion of the circuit located between the heating element (8) and a free end (4) of the liquid transport circuit (2).

14. Device (1) according to claim 13, **characterised in that** the temperature sensor (C) is a Negative Temperature Coefficient thermistor (N.T.C).

15. Device (1) according to any of claims 10 to 13, **characterised in that** the transport circuit (2) comprises a reservoir of liquid (15) connected in series with the pump (14) via a supplying end of the circuit (3) and the circuit (2) with liquid to be heated.

16. Device (1) according to claim 15, **characterised in that** said reservoir (15) is removable and provided with a gate valve (16) that automatically opens a passage of fluid (17) from the reservoir (15) to the pump (14) when the reservoir (15) is connected to the supplying end (3) and automatically opens this passage (17) when the reservoir (15) is disconnected from the supplying end (3).

17. Device (1) according to any of claims 11 to 16, **characterised in that** the main body has a thermal inertia less than that of aluminium.

18. Device (1) according to any of claims 11 to 17, **characterised in that** the additional element (10) is made from a metal material that has a transverse thermal conductivity coefficient (Cth) greater than 40.

19. Device (1) according to any of claims 11 to 18 combined with claim 14, **characterised in that** the main body (9) comprises a groove that makes it possible to define with the additional element (10) a channel (4) for the circulation of the liquid.

20. Device (1) according to claim 19, **characterised in that** the main body (1) is flat and **in that** the groove has the shape of a spiral.

21. Device (1) according to any of claims 11 to 20 combined with claim 14, **characterised in that** the main body (9) is cylindrical, and receives on its outer face the additional element (10) in the form of a sleeve.

Fig. 1

1

15

5

7

2

3

4

14

6

8

Fig. 2

Fig. 3

16

15

17

22

Fig. 4

18

3

C

7

5

Fig. 5

12

14

G

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2394215 A
- US 6000317 A
- WO 0154551 A1